# EUROPEAN PATENT APPLICATION

(11) **EP 4 366 151 A1**
(43) Date of publication of application: **08.05.2024**
(21) Application number: 22833038.7
(22) Date of filing: 24.06.2022
(51) Int. Cl.: H02P 3/22, D03C 5/00, D03C 9/04

(54) **LOOM, AND METHOD FOR CONTROLLING SAME**

(30) Priority: 28.06.2021 JP 2021107094
(71) Applicant: Shibaura Machine Co., Ltd., Tokyo 100-8503 (JP); KABUSHIKI KAISHA TOYOTA JIDOSHOKKI, Kariya-shi, Aichi 448-8671 (JP)
(72) Inventor: YOKOKAWA, Narutoshi, Numazu-shi, Shizuoka 410-8510 (JP); WATANABE, Kazuya, Numazu-shi, Shizuoka 410-8510 (JP); HARA, Shigeru, Kariya-shi, Aichi 448-8671 (JP)
(74) Representative: Hoffmann Eitle
(86) International application number: PCT/JP2022/025366
(87) International publication number: WO 2023/276891

(57) **Abstract**

A loom and a control method therefor that prevent sudden fall of a heald frame are provided. A loom according to an embodiment includes a heald frame, a driving portion configured to move the heald frame up and down, a power supply circuit configured to supply power to the driving portion, a switch circuit connected between a plurality of wires transferring the power from the power supply circuit to the driving portion and configured to short-circuit the wires to each other or open the wires in accordance with a control signal, and a control circuit configured to supply the control signal to the switch circuit to control the switch circuit. After cut-off of power supply from the power supply circuit to the driving portion, the switch circuit holds a short-circuit state or an open state based on the last control signal received before the cut-off of power supply.

## Description

### Field

An embodiment relates to a loom and a control method for the same.

### Background

There is known a loom including an electric shedding device. The electric shedding device is provided with a plurality of heald frames. In weaving by means of the loom, the pattern of cloth or threads can be determined by the kind of warp setting in the heald frame of the electric shedding device and timings of the up-and-down motion of the heald frame. For example, a servomotor is used for moving the heald frame up and down. In addition, an electromagnetic brake or a dynamic brake is used for stopping the up-and-down motion of the heald frame and holding the heald frame.

### Citation List

### Patent Literatures

Patent Literature 1: Japanese Patent Application Laid-open No. 2010-167429
Patent Literature 2: Japanese Patent Application Laid-open No. H9-247804
Patent Literature 3: Japanese Patent Application Laid-open No. 2003-204686
Patent Literature 4: Japanese Patent Application Laid-open No. H6-178567
Patent Literature 5: Japanese Patent Application Laid-open No. 2020-061851
Patent Literature 6: Japanese Patent Application Laid-open No. 2006-191722

### Summary

### Technical Problem

The electromagnetic brake is configured to be applied when power is lost. When power is lost, the brake automatically works to mechanically fixe a motor shaft. However, when power is unintentionally lost, for example, due to a power outage, the electromagnetic brake may work despite a situation where the motor is rotating at a high speed. Therefore, the electromagnetic brake is easy to deteriorate because of, for example, wear of a brake contact surface. Furthermore, an electromagnetic brake has to be provided for every motor, which results in increase in the loom size and the cost.

The dynamic brake is a brake that converts rotational energy of the motor to thermal energy by means of an electrical switch to decelerate or stop the rotation of the motor. Therefore, when power is cut off, it is likely that the dynamic brake cannot brake the motor and the heald frame suddenly falls. For example, there is a case where the loom is stopped and an operator works under the heald frame. In this case, when power is cut off in the middle of the work, the heald frame may suddenly fall and put the operator at risk.

For the reasons described above, a loom and a control method therefor are provided which are inexpensive and can prevent sudden fall of a heald frame even when power is lost.

### Solution to Problem

A loom according to an embodiment comprises a heald frame; a driving portion configured to move the heald frame up and down; a power supply circuit configured to supply power to the driving portion; a switch circuit connected between a plurality of wires transferring the power from the power supply circuit to the driving portion, and configured to short-circuit the wires to each other or open the wires in accordance with a control signal; and a control circuit configured to supply the control signal to the switch circuit to control the switch circuit, wherein after cut-off of power supply from the power supply circuit to the driving portion, the switch circuit holds a short-circuit state or an open state based on the last control signal received before the cut-off of power supply.

### Brief Description of Drawings

[FIG. 1] FIG. 1 is a configuration diagram illustrating an example of a loom according to a first embodiment.
[FIG. 2] FIG. 2 is a block diagram illustrating a configuration example of a driving portion according to the first embodiment.
[FIG. 3] FIG. 3 is a block diagram illustrating a configuration example of the driving portion the periphery of a brake mechanism.
[FIG. 4] FIG. 4 is a diagram illustrating an example of a contact holding relay switch according to the first embodiment.
[FIG. 5A] FIG. 5A is a diagram illustrating an example of short circuit of the contact holding relay switch according to the first embodiment.
[FIG. 5B] FIG. 5B is a diagram illustrating an example of a short circuit state of the contact holding relay switch following the state in FIG. 5A.
[FIG. 5C] FIG. 5C is a diagram illustrating an example of an open state of the contact holding relay switch following the state in FIG. 5B.
[FIG. 6A] FIG. 6A is a flowchart illustrating an example of a control method for the loom when the driving portion is stopped according to the first embodiment.
[FIG. 6B] FIG. 6B is a timing chart illustrating an example of a control method for the loom when the driving portion is stopped according to the first embodiment.
[FIG. 7A] FIG. 7A is a timing chart illustrating an example of a control method for the loom when the driving portion is driven according to the first embodiment.
[FIG. 7B] FIG. 7B is a timing chart illustrating another example of the control method for the loom when the driving portion is driven according to the first embodiment.
[FIG. 8A] FIG. 8A is a flowchart illustrating an example of the control method for the loom when driving of the driving portion is started according to the first embodiment.
[FIG. 8B] FIG. 8B is a timing chart illustrating an example of the control method for the loom when driving of the driving portion is started according to the first embodiment.

### Description of Embodiments

An embodiment of the present invention will now be explained below with reference to the drawings. The present embodiment does not limit the preset invention.

The drawings are schematic or conceptual and proportions of respective parts are not necessarily identical to the actual ones. In the specifications and the drawings, elements identical to those explained with respect to already mentioned drawings are denoted by identical reference signs and detailed explanations thereof are omitted as appropriate.

### (First embodiment)

### (Configuration of loom 100)

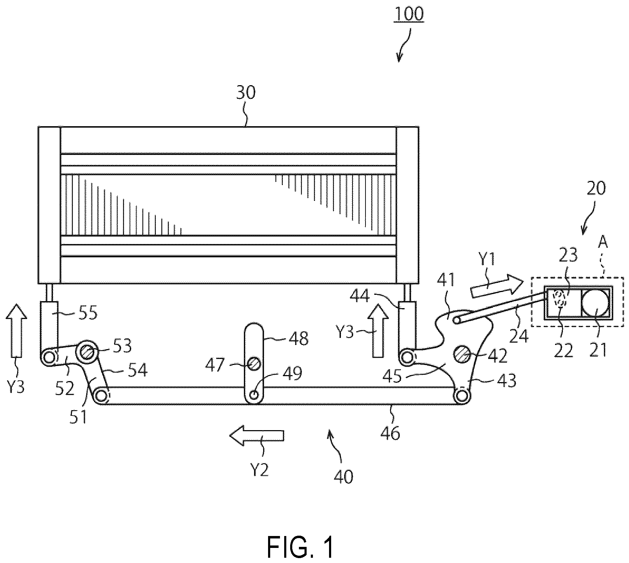

FIG. 1 is a diagram illustrating a configuration example of a loom 100 according to a first embodiment. The loom 100 mainly includes a driving portion 20, a heald frame 30, and a coupling portion 40 that couples the driving portion 20 and the heald frame 30 to each other.

The driving portion 20 includes a motor 21, a rotation shaft 22, and a crank arm 23. The motor 21 rotates the crank arm fixed to the rotation shaft to cause a shedding lever 41 that is provided on an oscillating shaft 42 to be able to turn around the oscillating shaft 42 to oscillate (rock or swing) in the direction of an arrow Y1 via a coupling rod 24. The shedding lever 41 is coupled at one arm 45 to the lower end of a lifting rod 44 coupled to the heald frame 30 and at the other arm 43 to the right end of a horizontal rod 46 arranged below the heald frame 30. An auxiliary lever 48 is provided above the horizontal rod 46 to extend in a direction perpendicular to the horizontal rod 46 and is supported by a shaft 47 to be able to oscillate.

The left end of the horizontal rod 46 is coupled to one arm 51 of an oscillating lever 54 which is provided on an oscillating shaft 53 arranged below the heald frame 30 to be rotatable around the oscillating shaft 53. The other arm 52 of the oscillating lever 54 is coupled to the lower end of a lifting rod 55 coupled to the heald frame 30. By this configuration, when the motor 21 is driven, a rotating motion of the motor 21 in one direction is converted to a linear motion of the coupling rod 24 in the direction of the arrow Y1 by the crank arm 23, so that the shedding lever 41 performs a reciprocating oscillating motion.

The shedding lever 41 moves the heald frame 30 up and down via the arm 45, the lifting rod 44, the arm 43, the horizontal rod 46, the oscillating lever 54, and the lifting rod 55 to perform shedding of warp. Therefore, the coupling portion 40 is configured by the coupling rod 24, the shedding lever 41, the lifting rod 44, the horizontal rod 46, the oscillating lever 54, and the lifting rod 55. As the coupling portion 40 is configured in this manner, the linear motion of the coupling rod 24 in the direction of the arrow the Y1 is converted to a linear motion of the horizontal rod 46 in the direction of an arrow Y2. The linear motion of the horizontal rod 46 in the direction of the arrow Y2 is then converted to an up-and-down motion of the lifting rod 44 and the lifting rod 55 in the direction of an arrow Y3. Accordingly, the heald frame 30 is moved up and down.

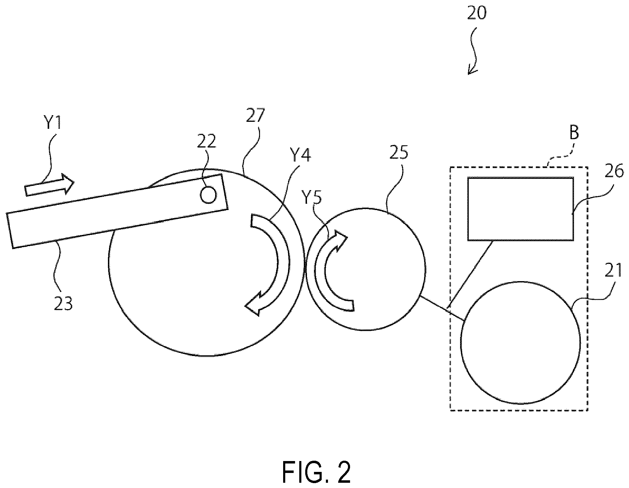

FIG. 2 is a block diagram illustrating a detailed configuration of the driving portion 20 described above. FIG. 2 is a block diagram illustrating a region A in FIG. 1 in an enlarged manner.

The driving portion 20 includes the motor 21, the rotation shaft 22, and the crank arm 23 described above and further includes a decelerator 25, a brake mechanism 26, and a crank rotary table 27.

The decelerator 25 is provided between the motor 21 and the crank rotary table 27. The decelerator 25 rotates in the direction of an arrow Y5 to reduce the rotational speed of the motor 21 and output motive power (driving power) of the motor 21 to the crank rotary table 27. Therefore, the decelerator 25 is joined to (contacts with) the crank rotary table 27. The crank rotary table 27 outputs the motive power of the motor 21 output from the decelerator 25, to the crank arm 23. Specifically, the crank rotary table 27 rotates about the rotation shaft 22 in the direction of an arrow Y4 to output the motive power of the motor 21 to the crank arm 23. The direction of the arrow Y4 is opposite to the direction of an arrow Y5 that is the direction of rotation of the decelerator 25. In this manner, the motive power of the motor 21 is output to the coupling rod 24 via the decelerator 25, the crank rotary table 27, and the crank arm 23. With this configuration, the coupling rod 24 performs the linear motion in the direction of the arrow Y1. The rotation shaft 22, the crank arm 23, the decelerator 25, and the crank rotary table 27 configure a driving mechanism.

The driving portion 20 moves the heald frame 30 up and down via the driving mechanism, the coupling rod 24, the horizontal rod 46, the lifting rod 44, and the lifting rod 55 in this manner. The motor 21 causes the driving mechanism to operate.

The brake mechanism 26 controls the motive power of the motor 21. Specifically, the brake mechanism 26 reduces the number of rotations of the motor 21 or stops the motor 21. The brake mechanism 26 includes, for example, an electromagnetic brake or a dynamic brake. The electromagnetic brake is a brake that mechanically fixes the motor shaft of the motor 21. Meanwhile, the dynamic brake is a brake applicable in a case where a magnet is used in a stator part or a rotor part of the motor 21. The dynamic brake converts rotational energy of the motor 21 to thermal energy by using an induced voltage generated by rotation of the motor 21, thereby decelerating or stopping the rotation of the motor 21.

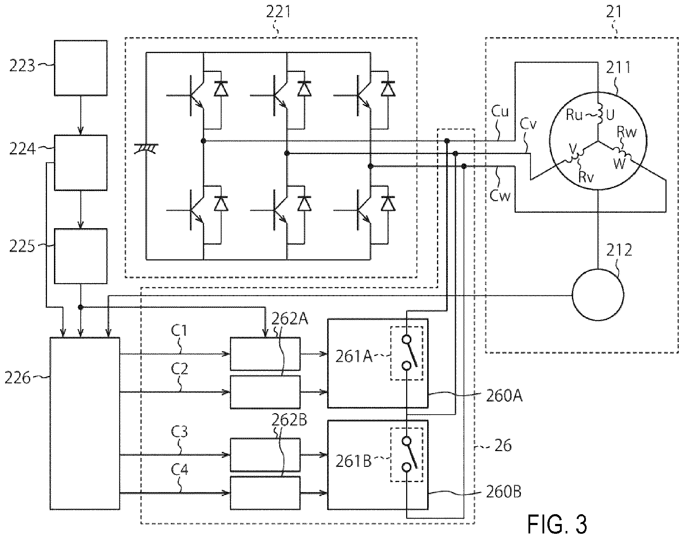

FIG. 3 is a block diagram illustrating a configuration of the motor 21, the brake mechanism 26, and the periphery of the motor 21 and the brake mechanism 26. FIG. 3 is a block diagram illustrating a region B in FIG. 2 in an enlarged manner.

The motor 21 includes a servomotor 211 and an encoder 212. A three-phase PM (Permanent Magnet) motor may be used as the servomotor 211. The three-phase PM motor uses a magnet in a stator part or a rotor part. Therefore, a dynamic brake can be applied to the brake mechanism 26 associated with this motor 21.

The servomotor 211 is a three-phase PM motor having a U phase, a V phase, and a W phase. Specifically, the servomotor 211 is a three-phase PM motor having the U phase, the V phase, and the W phase in which an induced voltage of each phase has a phase difference from an induced voltage of another phase.

The encoder 212 detects the number of rotations of the servomotor 211. The encoder 212 may include a position sensor, and may further detect the position and the rotational speed of the servomotor 211.

A power source 223 supplies power to the motor 21 (the driving portion 20). The power source 223 is, for example, a commercial AC power supply.

A transistor bridge circuit 221 as a power supply circuit is connected to the motor 21 via wires Cu, Cv, and Cw, receives power supply from the power source 223, and controls the position, the number of rotations, and the like of the motor 21. The transistor bridge circuit 221 is included in an inverter, for example.

A cut-off detection circuit 224 detects cut-off of power supply from the power source 223 to the transistor bridge circuit 221 and transmits a cut-off detection signal to a control power source 225 and a control circuit 226.

The control power source 225 temporarily supplies power to the control circuit 226 and the brake mechanism 26 also after the cut-off of power supply from the power source 223 to the transistor bridge circuit 221. The control circuit 226 and the brake mechanism 26 can continue to effectively operate due to power supply from the control power source 225, also after the cut-off of power supply to the transistor bridge circuit 221. The control power source 225 is a storage battery or a capacitor element having a power-supply voltage of several volts to tens of volts (from about 3 volts to about 24 volts), for example.

The control circuit 226 supplies a control signal to switch circuits 260A and 260B to control the switch circuits 260A and 260B. The control circuit 226 is implemented by, for example, a CPU (Central Processing Unit) provided with a program supplying the control signal or a logic circuit such as a PLC (Programmable Logic Controller). The control signal includes a first control signal and a second control signal. The first control signal is transmitted from the control circuit 226 to the switch circuits 260A and 260B and places the switch circuits 260 A and 260B in a short-circuit state. The second control signal is transmitted from the control circuit 226 to the switch circuits 260A and 260B similarly, but places the switch circuits 260A and 260B in an open state.

In FIG. 3, the control circuit 226 is connected to the switch circuit 260A via wires C1 and C2 and drive circuits 262A and to the switch circuit 260B via wires C3 and C4 and drive circuits 262B, for example. The control circuit 226 transmits the first control signal to the switch circuit 260A via the wire C1 and one of the drive circuits 262A and transmits the second control signal to the switch circuit 260A via the wire C2 and the other drive circuit 262A. Similarly, the control circuit 226 transmits the first control signal to the switch circuit 260B via the wire C3 and one of the drive circuits 262B and transmits the second control signal to the switch circuit 260B via the wire C4 and the other drive circuit 262B.

The brake mechanism 26 includes the switch circuits 260A and 260B and the drive circuits 262A and 262B. The switch circuits 260A and 260B are contact holding relay switch circuits respectively including contact holding relay switches 261A and 261B. The switch circuits 260A and 260B may have the same configuration as each other. The brake mechanism 26 is connected to the wires Cu, Cv, and Cw between the transistor bridge circuit 221 and the motor 21.

The switch circuits 260A and 260B are respectively connected between the wires Cu, Cv and between the wires Cv, Cw transferring power from the transistor bridge circuit 221 to the motor 21 and can short-circuit or open the wires Cu and Cv or Cv and Cw in accordance with the first or second control signal.

As illustrated in FIG. 3, when the control circuit 226 transmits the first control signal to the switch circuit 260A to short-circuit the switch circuit 260A, for example, the wires Cu and Cv are short-circuited to each other. When the control circuit 226 transmits the first control signal to the switch circuit 260B to short-circuit the switch circuit 260B, the wires Cv and Cw are short-circuited to each other. When the control circuit 226 transmits the first control signal to the switch circuit 260A and the switch circuit 260B to short-circuit the switch circuit 260A and the switch circuit 260B, all the wires Cu, Cv, and Cw are short-circuited to one another.

In other words, when the control circuit 226 transmits the first control signal to the switch circuit 260A to short-circuit the switch circuit 260A, the U phase and the V phase of the servomotor 211 are short-circuited to each other. When the control circuit 226 transmits the first control signal to the switch circuit 260B to short-circuit the switch circuit 260B, the V phase and the W phase of the servomotor 211 are short-circuited to each other. When the control circuit 226 transmits the first control signal to the switch circuit 260A and the switch circuit 260B to short-circuit the switch circuit 260A and the switch circuit 260B, the U phase, the V phase, and the W phase of the servomotor 211 are all short-circuited to each other.

By short-circuiting the switch circuit 260A and/or the switch circuit 260B, the U phase and the V phase, the V phase and the W phase, or the U phase, the V phase, and the W phase of the servomotor 211 are short-circuited to each other, so that a short circuit is formed via resistances Ru and Rv, resistances Rv and Rw, and/or resistances Ru, Rv and Rw in the servomotor 211. The servomotor 211 is a three-phase PM motor having the U phase, the V phase, and the W phase in which an induced voltage of each phase has a phase difference from an induced voltage of another phase. Therefore, a current generated by the induced voltage flows in the short circuit formed via the resistances Ru and Rv, the resistances Rv and Rw, and/or the resistances Ru, Rv and Rw in the servomotor 211. The current flowing in this short circuit is converted from electrical energy to thermal energy in the resistance Ru, the resistance Rv, and/or the resistance Rw. Consequently, rotational resistance is generated in the rotation of the servomotor 211, thereby decelerating or stopping the rotation of the servomotor 211.

With this configuration, the switch circuit 260A or the switch circuit 260B is caused to function as a dynamic brake for the servomotor 211 by short-circuiting the corresponding wires among the wire Cu, the wire Cv, and the wire Cw. That is, the switch circuit 260A or the switch circuit 260B is caused to function as a dynamic brake for the servomotor 211 by short-circuiting the U phase and the V phase, the V phase and the W phase, or the U phase, the V phase, and the W phase of the servomotor 211 to each other. Although the switch circuit 260A and the switch circuit 260B that are two switch circuits 260 are illustrated in FIG. 3, the loom 100 according to the first embodiment can also be implemented by using a single switch circuit 260. Further, the loom 100 can also be implemented by using three switch circuits. For example, an additional switch circuit may be provided between the wires Cw and Cu. This configuration enables the switch circuits to function as a dynamic brake that short-circuits not only the U phase and the V phase, the V phase and the W phase, or the U phase, the V phase, and the W phase of the servomotor 211 to each other but also the W phase and the U phase to each other.

The drive circuits 262A and 262B are connected between the control circuit 226 and the switch circuit 260A and between the control circuit 226 and the switch circuit 260B, respectively. The drive circuits 262A and 262B amplify the control signal transferred via the wires C1 to C4 and transmit it to the switch circuits 260A and 260B. The switch circuits 260A and 260B are effectively controlled based on this control signal.

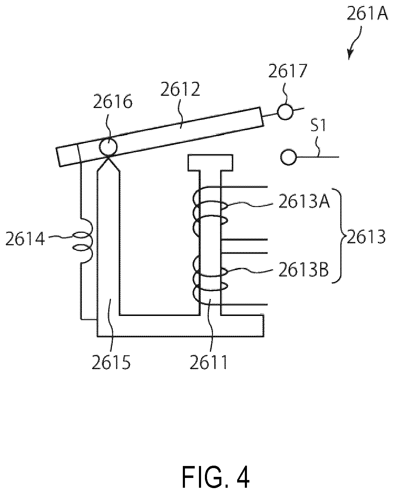

FIG. 4 is a detailed configuration diagram of the contact holding relay switch 261A. The contact holding relay switch 261B has the same configuration as the contact holding relay switch 261A. Therefore, the configuration of the contact holding relay switch 261A is described here, and descriptions of the contact holding relay switch 261B are omitted.

As illustrated in FIG. 4, the contact holding relay switch 261A includes a terminal 2611, a connection piece 2612, and a coil 2613. The connection piece 2612 is an example of a movable connection piece. The terminal 2611 contains a ferromagnetic material that can easily be magnetized by a current caused to flow through the coil 2613. The connection piece 2612 can be moved by the magnetic force of the terminal 2611 to come into contact with the terminal 2611 or separate from the terminal 2611. The connection piece 2612 contains, for example, iron. The coil 2613 is provided to be wound around the terminal 2611 and causes the terminal 2611 to generate the magnetic force that moves the connection piece 2612 or magnetizes the terminal 2611. The coil 2613 includes a coil 2613A and a coil 2613B. The winding direction of the coil 2613A is opposite to the winding direction of the coil 2613B.

Further, the contact holding relay switch 261A includes a spring 2614, a support piece 2615, a motion axis 2616, and a switch terminal 2617. The spring 2614 is an example of a return spring. The spring 2614 is attached so as to separate the connection piece 2612 from the terminal 2611. The support piece 2615 supports the connection piece 2612. The motion axis 2616 couples the connection piece 2612 and the support piece 2615 to each other and serves as an axis of a contacting motion and a separating motion of the connection piece 2612. The switch terminal 2617 is a terminal that comes into contact with an external switch terminal S1. The switch circuit 260 is short-circuited or opened by this contact holding relay switch 261A.

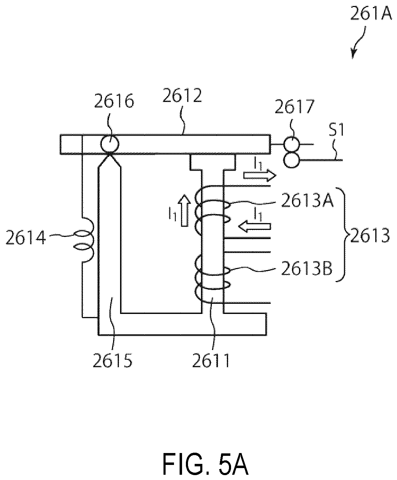

Next, the on state and the off state of the contact holding relay switch 261A are described with reference to FIGS. 5A to 5C. Descriptions are provided by referring to the contact holding relay switch 261A similarly to the descriptions of FIG. 4, and descriptions referring to the contact holding relay switch 261B are omitted.

FIG. 5A is an explanatory diagram of the on state of the contact holding relay switch 261A. The switch terminal 2617 comes into contact with the external switch terminal S1, whereby the contact holding relay switch 261A is placed in an on state.

As illustrated in FIG. 5A, a current I1 flows through the coil 2613A. Accordingly, a magnetic field is generated around the coil 2613A. The terminal 2611 is magnetized by the magnetic field generated around the coil 2613A. Since the terminal 2611 contains a ferromagnetic material, magnetic polarization (magnetization) occurs in the terminal 2611, so that the terminal 2611 serves as a magnet. Since the connection piece 2612 contains iron as described above, magnetic force is generated between the connection piece 2612 and the magnetized terminal 2611. Consequently, the terminal 2611 and the connection piece 2612 are joined to (contacts with) each other, and the switch terminal 2617 and the external switch terminal S1 are joined to (contacts with) each other, as illustrated in FIG. 5A. That is, the contact holding relay switch 261A becomes an on state.

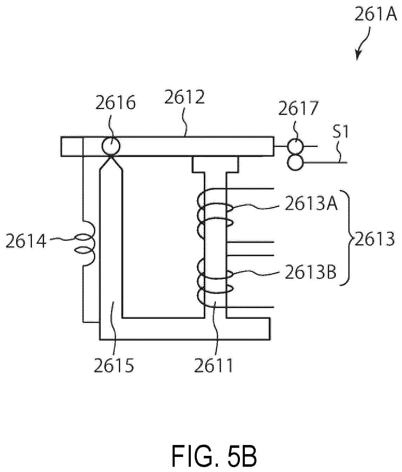

FIG. 5B is an explanatory diagram of the on state of the contact holding relay switch 261A after a current has been caused to flow through the coil 2613A.

After the current I1 has been caused to flow through the coil 2613A as illustrated in FIG. 5A, no current is caused to flow through the coil 2613A in FIG. 5B. That is, the current I1 flowing through the coil 2613A in FIG. 5A is stopped. Accordingly, no magnetic field is generated around the coil 2613A. However, the terminal 2611 contains a ferromagnetic material and, once being magnetized, retains a function as a magnet like a permanent magnet. Therefore, also after the current I1 flowing through the coil 2613A has been stopped, the terminal 2611 and the connection piece 2612 continue to be joined to each other, and the switch terminal 2617 and the external switch terminal S1 continue to be in contact with each other, as illustrated in FIG. 5B. That is, the contact holding relay switch 261A continues to be in the on state.

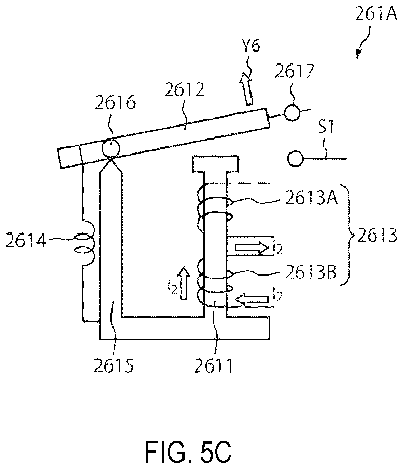

FIG. 5C is an explanatory diagram when the contact holding relay switch 261A is switched from an on state to an off state.

In order to place the contact holding relay switch 261A in an off state, a current I2 is caused to flow through the lower coil 2613B. Accordingly, a magnetic field generated around the coil 2613B by the flow of the current I2 is generated in an opposite direction to the magnetic field generated around the coil 2613A by the flow of the current I1. Therefore, magnetic polarization (magnetization) in the terminal 2611 caused by the magnetic field generated by the current I2 occurs in the opposite direction to the magnetic polarization in the terminal 2611 caused by the magnetic field generated by the current I1. The magnetic field caused by the current I2 weakens magnetization of the terminal 2611 that has been magnetized by the current I1. Accordingly, the magnetic force of the terminal 2611 decreases. Consequently, the terminal 2611 and the connection piece 2612 separate from each other in the direction of an arrow Y6, and the switch terminal 2617 and the external switch terminal S1 separate from each other, as illustrated in FIG. 5C. That is, the contact holding relay switch 261A becomes an off state. The spring 2614 assists separation of the terminal 2611 and the connection piece 2612 from each other.

As described above, the contact holding relay switch 261A is configured to be able to hold the on state also after cut-off of power supply. Therefore, once the contact holding relay switch 261A receives power supply from the control power source 225 and is placed in the on state by the first control signal after cut-off of power supply to the transistor bridge circuit 221, the contact holding relay switch 261A keeps the on state even when power supply from the control power source 225 is lost or even when the first control signal is deactivated.

Further, the contact holding relay switch 261A cancels the held on state and becomes an off state as illustrated in FIG. 5C. In other words, the contact holding relay switch 261A is placed in the off state by activation of the second control signal.

Although the coil 2613 is configured by two coils (the coils 2613A and 2613B) in FIGS. 5A, 5B, and 5C, the loom 100 according to the first embodiment can also be implemented by using the coil 2613 configured by a single coil. In this case, effects identical to those in FIGS. 5A, 5B, and 5C described above are obtained by making the flowing direction of the current caused to flow through the coil 2613 opposite between when the contact holding relay switch 261A is placed in an on state and when the contact holding relay switch 261A is placed in an off state.

### (Control method for loom 100)

Next, a control method for the loom 100 according to the first embodiment is described.

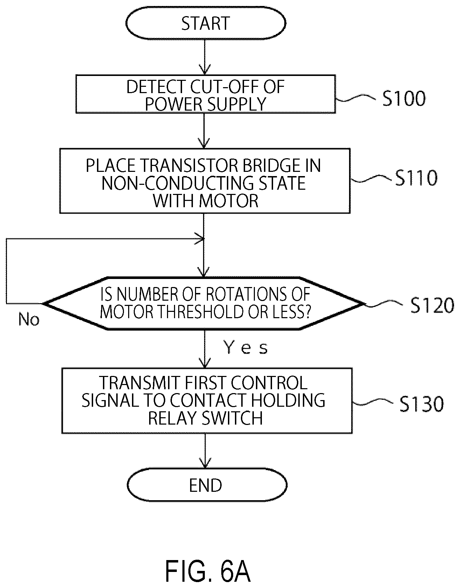

FIG. 6A is a flowchart for explaining a control method for the loom 100 which prevents sudden fall of the heald frame 30 when the motor 21 is stopped.

First, the cut-off detection circuit 224 detects cut-off of power supply from a power source to the transistor bridge circuit 221 (Step S100). For example, the cut-off detection circuit 224 detects the cut-off of power supply from the power source to the transistor bridge circuit 221 due to occurrence of a power outage or the like.

Next, the control circuit 226 places transistors in the transistor bridge circuit 221 in a non-conducting state (an off state) (Step S110). If the transistors in the transistor bridge circuit 221 remain in a conducting state, a current generated in the motor 21 flows to the transistor bridge circuit 221. Therefore, an overcurrent may flow to the transistor bridge circuit 221 when the motor 21 is rotating at a high speed. Such overcurrent leads to a failure of the transistor bridge circuit 221. For this reason, the control circuit 226 places the transistors in the transistor bridge circuit 221 in a non-conducting state at Step S110.

Next, the control circuit 226 checks that the number of rotations of the motor 21 is a threshold or less (Step S120). Specifically, the control circuit 226 detects the number of rotations of the motor 21 by means of the encoder 212 and checks that the detected number of rotations of the motor 21 is the threshold or less. When the number of rotations of the motor 21 is equal to or larger than the threshold (No at Step S120), the control circuit 226 stands by while checking the number of rotations of the motor 21 until the number of rotations of the motor 21 becomes the threshold or less. When the switch circuit 260A or 260B becomes the short-circuit state during high-speed rotation of the motor 21, an overcurrent may flow to the switch circuit 260A or 260B. Such an overcurrent leads to a failure of the switch circuit 260A or 260B. Therefore, the control circuit 226 places the switch circuit 260A or 260B in a short-circuit state after the number of rotations of the motor 21 becomes the threshold or less.

When the number of rotations of the motor 21 is the threshold or less (Yes at Step S120), the control circuit 226 transmits the first control signal that places the switch circuit 260 in the short-circuit state to the contact holding relay switch 261A or 261B via the drive circuit 262 (Step S130). With this process, the contact holding relay switch 261 becomes an on state, so that the corresponding wires among the wire Cu, the wire Cv, and the wire Cw of the motor 21 is short-circuited. Consequently, a short circuit is formed via the corresponding resistances among the resistance Ru, the resistance Rv, or the resistance Rw in the motor 21. With this process, a dynamic brake for the motor 21 becomes effective. In this case, when the heald frame 30 located above is about to fall suddenly, an induced current flows to the above short circuit, and the dynamic brake is applied. Therefore, the heald frame 30 slowly moves down by the gravity and a braking function of the dynamic brake. As described above, sudden fall of the heald frame 30 is prevented even when the number of rotations of the motor 21 is the threshold or less and the motor 21 is almost stopped.

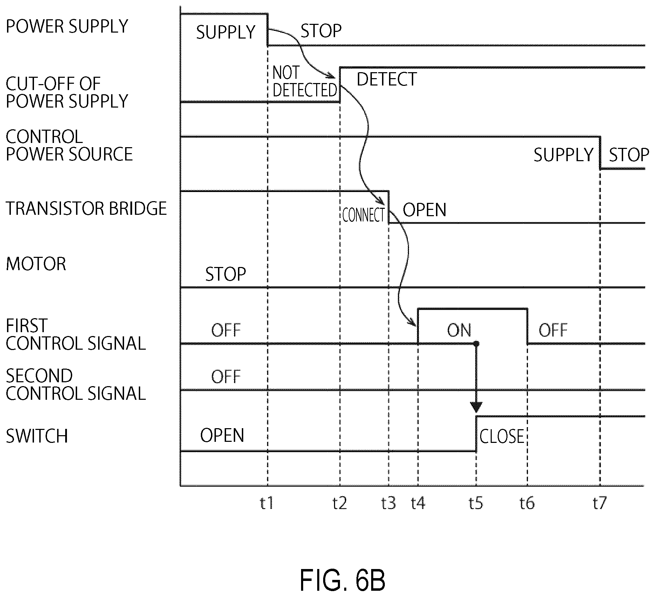

FIG. 6B is a timing chart illustrating an operation of the loom 100 when the servomotor 211 of the motor 21 has been already stopped at the time of cut-off of power supply.

As illustrated in FIG. 6B, when power supply from the power source 223 is stopped (t1), the cut-off detection circuit 224 detects cut-off of power supply (t2). When the cut-off detection circuit 224 detects the cut-off of power supply, the control circuit 226 places transistors in the transistor bridge circuit 221 in an open state (an off state) (t3). The control power source 225 continues to supply power to the control circuit 226 and the contact holding relay switches 261A and 261B for a while also after the cut-off of power supply. The control circuit 226 opens the transistors in the transistor bridge circuit 221 from connection to the motor 21, checks that the number of rotations of the motor 21 becomes a threshold or less, and transmits the first control signal to the contact holding relay switch 261 (t4). The contact holding relay switch 261 becomes an on state upon receiving the first control signal (t5). After the contact holding relay switch 261 becomes the on state, the first control signal is deactivated (t6), and the control power source also stops supply (t7). The second control signal that places the contact holding relay switch 261 in an off state is inactive from t1 to t7.

As described above, according to the control method for the loom 100 when the servomotor 211 of the motor 21 is stopped, the loom 100 holds the on state of the contact holding relay switch 261 even when power supply from a power source is cut off. In other words, after cut-off of power supply from the transistor bridge circuit 221 to the driving portion 20, the loom 100 holds the short-circuit state or the open state of the switch circuit 260 based on the last control signal received before the cut-off of power supply.

With this configuration, a dynamic brake for the motor 21 becomes effective even when power supply from the power source is cut off. Accordingly, when the heald frame 30 is about to fall suddenly, an induced current flows to a short circuit including the resistances Ru, Rv, and Rw in the motor 21, and the dynamic brake is applied to the motor 21. Therefore, the heald frame 30 slowly moves down by the gravity and a braking function of the dynamic brake, so that sudden fall is prevented. Consequently, for example, safety of an operator who works under the heald frame 30 can be ensured even when power supply from the power source to the transistor bridge circuit 221 is cut off.

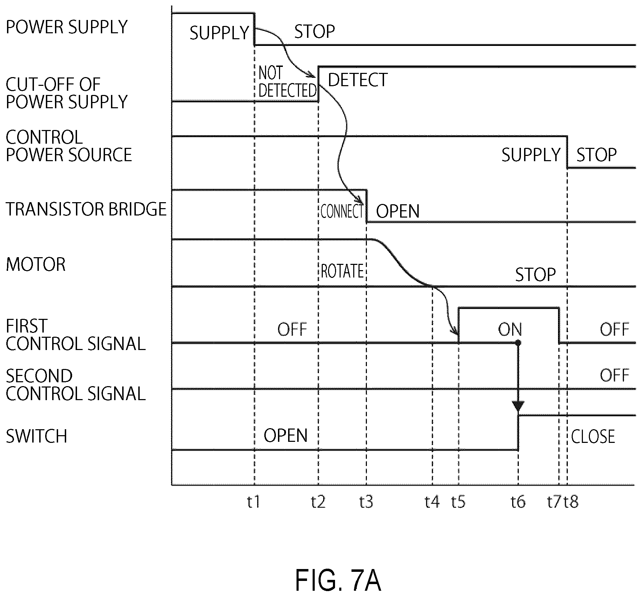

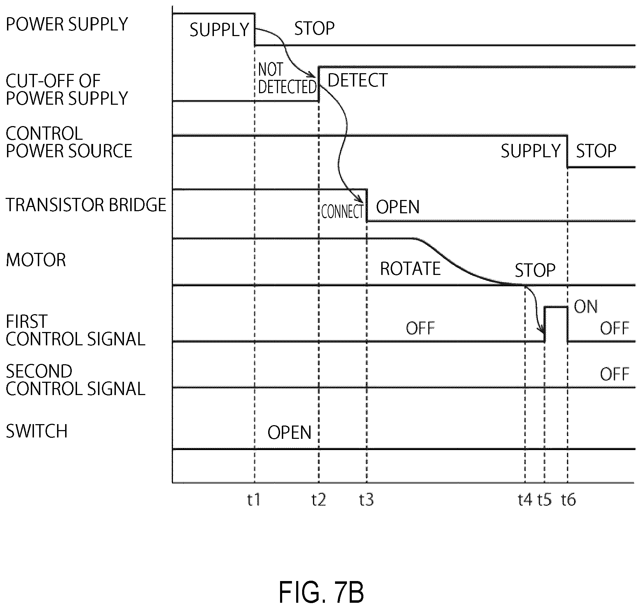

Next, a control method for the loom 100 which prevents sudden fall of the heald frame 30 when the motor 21 is being driven is described with reference to FIGS. 7A and 7B.

FIG. 7A is a timing chart illustrating an operation of the loom 100 when power supply is cut off during rotation of the servomotor 211 of the motor 21.

As illustrated in FIG. 7A, when power supply from a power source is stopped (t1), the cut-off detection circuit 224 detects the cut-off of power supply (t2). When the cut-off detection circuit 224 detects the cut-off of power supply, the control circuit 226 places transistors in the transistor bridge circuit 221 in an open state (an off state) (t3). The control power source 225 continues to supply power to the control circuit 226 and the contact holding relay switches 261A and 261B for a while also after the cut-off of power supply. When the encoder 212 checks that the speed of rotation of the motor 21 is a threshold or less (t4), the control circuit 226 transmits the first control signal to the contact holding relay switch 261 (t5). The contact holding relay switch 261 becomes an on state upon receiving the first control signal (t6). After the contact holding relay switch 261 becomes the on state, the first control signal is deactivated (t7), and the control power source also stops supply (t8). The second control signal that opens the contact holding relay switch 261 is inactive from t1 to t8.

As described above, according to the control method for the loom 100 when the servomotor 211 of the motor 21 is rotating, the loom 100 holds the on state of the contact holding relay switch 261 even when power supply from a power source is cut off. In other words, after cut-off of power supply from the transistor bridge circuit 221 to the driving portion 20, the loom 100 holds the short-circuit state or the open state based on the last control signal received before the cut-off of power supply.

With this configuration, a dynamic brake for the motor 21 becomes effective even when power supply from the power source is cut off. Since the number of rotations of the motor 21 becomes the threshold or less or since rotation of the motor 21 is stopped, an induced current flows to a short circuit including the corresponding resistances among the resistances Ru, Rv, and Rw in the motor 21 when the heald frame 30 is about to fall suddenly, whereby the dynamic brake is applied to the motor 21. Therefore, even when power supply from the power source is cut off during the up-and-down motion of the heald frame 30, the heald frame 30 slowly moves down by the gravity and a braking function of the dynamic brake, so that sudden fall is prevented. Accordingly, sudden fall of the heald frame 30 can be prevented. Therefore, for example, safety of an operator who works near the heald frame 30 can be ensured even when power supply from the power source to the transistor bridge circuit 221 is cut off.

FIG. 7B is a timing chart illustrating an operation of the loom 100 when power supply is cut off during rotation of the servomotor 211 of the motor 21, similarly to FIG. 7A.

FIG. 7B illustrates a case where an idle time of the motor 21 from cut-off of power supply is relatively long, for example, because the number of rotations of the motor 21 is large at the time of the cut-off of power.

As illustrated in FIG. 7B, when power supply from a power source is stopped (t1), the cut-off detection circuit 224 detects the cut-off of power supply (t2). In FIG. 7B, the motor 21 continues to rotate from the cut-off of power supply until supply from a control power source is stopped. When the cut-off detection circuit 224 detects the cut-off of power supply, the control circuit 226 places transistors in the transistor bridge circuit 221 in an open state (an off state) (t3). The control power source 225 continues to supply power to the control circuit 226 and the contact holding relay switches 261A and 261B for a while even when power supply is cut off.

Next, the encoder 212 checks that the number of rotations of the motor 21 is a threshold or less (t4). In FIG. 7B, the number of rotations of the motor 21 is large as described above. Therefore, the idle time from the cut-off of power supply is relatively long. In other words, a time period from the cut-off of power supply to a time at which the number of rotations of the motor 21 becomes the threshold or less is relatively long. Next, when the number of rotations of the motor 21 becomes the threshold or less, the control circuit 226 transmits the first control signal to the contact holding relay switch 261 (t5). Although the contact holding relay switch 261 receives the first control signal, power supply from the control power source is stopped and the switch 261 holds the off state (t6). Therefore, the contact holding relay switch 261 is in the off state from t1 to t6. The second control signal that places the contact holding relay switch 261 in the off state is inactive from t1 to t6.

As described above, even when the control circuit 226 transmits the first control signal to the contact holding relay switch 261, the contact holding relay switch 261 may not become an on state, for example, if power from the control power source 225 is stopped before the contact holding relay switch 261 becomes the on state. That is, a dynamic brake for the motor 21 may not become effective. In this case, until the control power source stops supply, the motor 21 rotates, and the heald frame 30 moves up and down. Therefore, for example, any operator does not work under the heald frame 30, and thus safety of the operator can be ensured.

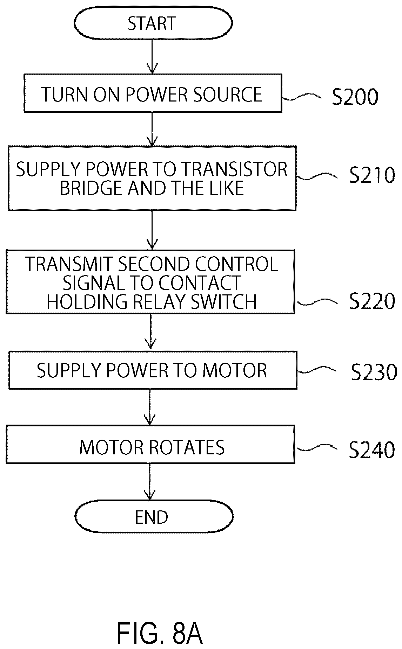

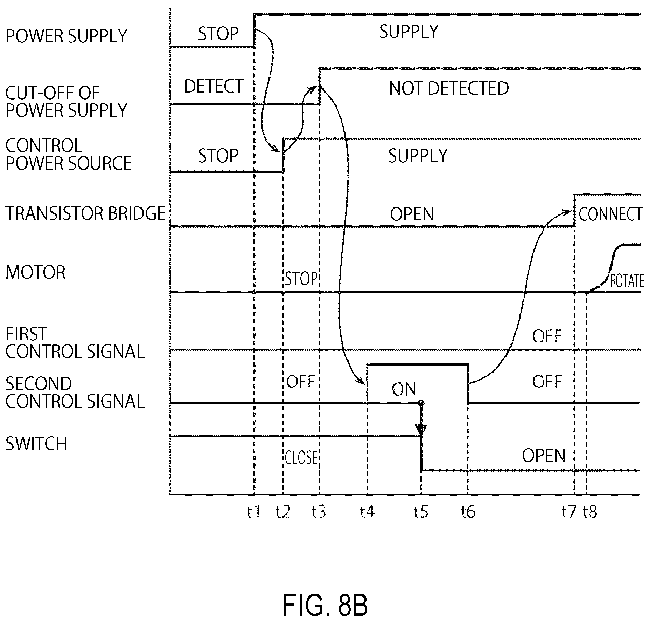

Next, a control method for the loom 100 which causes the motor 21 to revert is described with reference to FIGS. 8A and 8B.

FIG. 8A is a flowchart for explaining a control method for the loom 100 when the motor 21 is caused to revert from a state where power of the motor 21 is cut off. FIG. 8B is a timing chart for explaining the control method for the loom 100 when the motor 21 is caused to revert from the state where power of the motor 21 is cut off. A power return operation of the loom 100 is described with reference to FIGS. 8A and 8B.

First, the power source 223 is turned on (S200 in FIG. 8A and t1 in FIG. 8B), and power is supplied to the cut-off detection circuit 224, the control power source 225, the control circuit 226, the transistor bridge circuit 221, the brake mechanism 26, and the motor 21 (S210 in FIG. 8A and t2 in FIG. 8B). Accordingly, the control power source 225 is charged. In addition, the cut-off detection circuit 224 reverts and becomes a state where it can detect cut-off of power from the power source 223 to the transistor bridge circuit 221 (t3 in FIG. 8B).

When power supply from the power source 223 to the transistor bridge circuit 221 is started (S210 in FIG. 8A and t3 in FIG. 8B), the control circuit 226 transmits the second control signal that places the switch circuit 260 in an open state to the contact holding relay switch 261A or 261B (S220 in FIG. 8A and t4 in FIG. 8B). The second control signal is activated in a pulsed manner and falls after a predetermined time period passes from rising (t6 in FIG. 8B). Accordingly, the contact holding relay switch 261A or 261B becomes an off state (t5 in FIG. 8B), and the short-circuit state between the corresponding wires among the wire Cu, Cv, and Cw and the other wire of the motor 21 is changed to an open state. Accordingly, a short circuit formed via the corresponding resistances among the resistance Ru, Rv, and Rw in the motor 21 is canceled, so that the braking state of a dynamic brake circuit is canceled. Consequently, power supply to the motor 21 is started (S230 in FIG. 8A and t7 in FIG. 8B), and the motor 21 starts to rotate (S240 in FIG. 8A and t8 in FIG. 8B). Thereafter, during a normal operation of the motor 21, the first and second control signals are kept in an inactive state (an off state).

As described above, when the motor 21 is caused to revert from the state where it is stopped, the loom 100 activates the second control signal to reset the switch circuit 260 and place the switch circuit 260 in an open state, thereby canceling a dynamic brake and starting to move the heald frame 30 up and down. Therefore, also when power reverts after it has been cut off, the up-and-down motion of the heald frame 30 can be started or restarted smoothly.

While a certain embodiment of the present invention has been described, these embodiments have been presented by way of example only, and are not intended to limit the scope of the inventions. Indeed, the embodiment described herein may be embodied in a variety of other forms; furthermore, various omissions, substitutions and changes may be made without departing from the spirit of the inventions. These embodiments and modifications thereof would fall within the scope and spirit of the invention, and would fall within the invention described in the accompanying claims and their equivalents.

### Description of Reference Signs

100 loom, 20 driving portion, 21 motor, 211 servo motor, 212 encoder, 22 rotation shaft, 221 transistor bridge circuit, 223 power source, 224 cut-off detection circuit, 225 control power source, 226 control circuit, 23 crank arm, 25 decelerator, 26 brake mechanism, 260 (260A, 260B) switch circuit, 261 (261A, 261B) contact holding relay switch, 262 (262A, 262B) drive circuit, 2611 terminal, 2612 connection piece, 2613 coil, 2614 spring, 2615 support piece, 2616 motion axis, 2617 switch terminal, 27 crank rotary table, 30 heald frame, 40 coupling portion, C1 to C4 wire, Cu, Cv, Cw wire, Ru, Rv, Rw resistance, S1 external switch terminal

## Claims

1. A loom comprising:
a heald frame;
a driving portion configured to move the heald frame up and down;
a power supply circuit configured to supply power to the driving portion;
a switch circuit connected between a plurality of wires transferring the power from the power supply circuit to the driving portion, and configured to short-circuit the wires to each other or open the wires in accordance with a control signal; and
a control circuit configured to supply the control signal to the switch circuit to control the switch circuit, wherein
after cut-off of power supply from the power supply circuit to the driving portion, the switch circuit holds a short-circuit state or an open state based on the last control signal received before the cut-off of power supply.

2. The loom of Claim 1, wherein the driving portion includes
a driving mechanism configured to cause the heald frame to operate, and
a motor configured to cause the driving mechanism to operate.

3. The loom of Claim 2, wherein the switch circuit functions as a dynamic brake for the motor by short-circuiting the wires to each other.

4. The loom of Claim 2 or 3, wherein
the motor is a three-phase motor having a U phase, a V phase, and a W phase in which an induced voltage of each phase has a phase difference from an induced voltage of another phase, and
the switch circuit functions as a dynamic brake for the motor by short-circuiting the U phase and the V phase, the V phase and the W phase, the W phase and the U phase, or the U phase, the V phase, and the W phase to each other.

5. The loom of any one of Claims 1 to 4, wherein the switch circuit includes a contact holding relay switch.

6. The loom of Claim 5, wherein
the contact holding relay switch includes
a terminal containing a ferromagnetic material,
a movable connection piece configured to be movable by magnetic force of the terminal to come into contact with the terminal or separate from the terminal, and
a coil provided on the terminal and configured to cause the terminal to generate the magnetic force that moves the movable connection piece.

7. The loom of any one of Claims 1 to 6, further comprising a cut-off detection circuit configured to detect cut-off of power supply from a power source to the power supply circuit and to output a cut-off detection signal indicating the cut-off of power supply, wherein
the power supply circuit stops the power supply to the driving portion in response to the cut-off detection signal.

8. The loom of Claim 7, further comprising a speed detector configured to detect number of rotations of a motor of the driving portion, wherein
the control circuit places the switch circuit in a short-circuit state by the control signal, when the number of rotations of the motor becomes a threshold or less after the power supply to the driving portion has been stopped in response to the cut-off detection signal.

9. The loom of any one of Claims 1 to 8, wherein
the control signal includes a first control signal that places the switch circuit in a short-circuit state and a second control signal that places the switch circuit in an open state,
after the first control signal has been activated and the switch circuit has been placed in a short-circuit state, the switch circuit keeps the short-circuit state even when the control circuit deactivates the first control signal.

10. The loom of Claim 9, wherein the switch circuit is placed in an open state by activation of the second control signal by the control circuit.

11. A control method for a loom including a heald frame, a driving portion configured to move the heald frame up and down, a power supply circuit configured to supply power to the driving portion, a switch circuit connected between a plurality of wires transferring the power from the power supply circuit to the driving portion, and configured to short-circuit the wires to each other or open the wires in accordance with a control signal, and a control circuit configured to supply the control signal to the switch circuit, the method comprising,
after cut-off of power supply from the power supply circuit to the driving portion, holding a short-circuit state or an open state based on the last control signal received before the cut-off of power supply.

12. The method of Claim 11, wherein
the driving portion is a three-phase motor having a U phase, a V phase, and a W phase in which an induced voltage of each phase has a phase difference from an induced voltage of another phase, and
the switch circuit functions as a dynamic brake for the driving portion by short-circuiting the U phase and the V phase, the V phase and the W phase, the W phase and the U phase, or the U phase, the V phase, and the W phase to each other.

13. The method of Claim 11 or 12, wherein
the loom further includes a speed detector configured to detect number of rotations of a motor of the driving portion and a cut-off detection circuit configured to detect cut-off of power supply from a power source to the power supply circuit and to output a cut-off detection signal indicating the cut-off of power supply,
the method further comprises:
stopping the power supply to the driving portion in response to the cut-off detection signal; and
when the number of rotations of the motor becomes a threshold or less after the stop of power supply to the driving portion in response to the cut-off detection signal, the control circuit places the switch circuit in a short-circuit state by the control signal.

14. The method of any one of Claims 11 to 13, wherein
the control signal includes a first control signal that places the switch circuit in a short-circuit state and a second control signal that places the switch circuit in an open state,
the method further comprises:
placing the switch circuit in the short-circuit state by activating the first control signal;
causing the switch circuit to keep the short-circuit state even when the first control signal is deactivated; and
placing the switch circuit in the open state by activating the second control signal.
